# EUROPÄISCHE PATENTSCHRIFT

(11) **EP 3 983 186 B1**
(45) Veröffentlichungstag und Bekanntmachung des Hinweises auf die Patenterteilung: **29.05.2024**
(21) Anmeldenummer: 20731069.9
(22) Anmeldetag: 05.06.2020
(51) Int. Cl.: B27D 5/00

(54) **HYDROPHOBE FLÜSSIGKEIT UND DEREN VERWENDUNG**
HYDROPHOBIC FLUID AND ITS USE
FLUIDE HYDROPHOBE ET UTILISATION

(30) Priorität: 14.06.2019 DE 102019116282
(43) Veröffentlichungstag der Anmeldung: 20.04.2022
(73) Patentinhaber: RFH Chemie GmbH & Co. KG, 32257 Bünde (DE)
(72) Erfinder: Riepe, Bernd, 32257 Bünde (DE)
(74) Vertreter: Kleine, Hubertus
(86) Internationale Anmeldenummer: PCT/EP2020/065671
(87) Internationale Veröffentlichungsnummer: WO 2020/249484

(56) Entgegenhaltungen:
- DE-A1-102007 002 395
- US-A1- 2019 270 219

## Beschreibung

Insbesondere im Verbindungsbereich zweier Bauteile, von denen zumindest eines aus einem Holz oder Holzwerkstoff besteht, wenn in die fertigungsbedingt vorhandene Fuge Feuchtigkeit oder Nässe dringt, die dazu führt, dass das Holz oder der Holzwerkstoff aufquillt.

Der Einfachheit halber wird im Folgenden lediglich Holz als feuchtigkeitsempfindliches Material erwähnt, da ein Holzwerkstoff insoweit vergleichbare Eigenschaften aufweist, nämlich die Feuchtigkeit aufzunehmen.

Beispielhaft sei bei der genannten Problematik auf Fußbodendielen oder dergleichen hingewiesen, die beispielsweise mittels einer Nut-Feder-Verbindung aneinander gehalten werden.

Zwar ist schon versucht worden, diese Verbindungsbereiche mit einer hydrophoben Flüssigkeit zu beschichten, die sich allerdings allesamt als in Bezug auf eine dauerhafte Versiegelung ungenügend gezeigt haben.

Hierzu zählt beispielsweise das Aufbringen von Wachs, in flüssiger oder pastöser Form, was sowohl hinsichtlich der Standzeit dieser Beschichtung wie auch hinsichtlich ihres Auftrags problematisch ist, letzteres insbesondere dann, wenn die einzelnen Bauteile aus Holz in großen Stückzahlen hergestellt werden.

Beispielsweise beschreibt die Druckschrift DE 10 2007 002 395 A1 ein Mittel zur Laminat- und Parkettkantenhydrophobierung, das auf Wachssäuren, z.B. Stearinsäure oder Behensäure, basiert. Das Mittel wird in einem Temperaturbereich von 60 bis 100°C aufgetragen, in dem es flüssig ist. Aufgetragene Schichten härten aus, sobald eine Schmelztemperatur von etwa 60°C unterschritten ist.

Eine andere hydrophobe Flüssigkeit ist bekannt geworden, die allerdings brennbar bzw. entflammbar ist und daher zumindest für den industriellen Einsatz nicht geeignet ist, da hier besondere Bedingungen zum Arbeitsschutz eingehalten werden müssen.

Das Problem des Aufquellens ergibt sich auch bei einer Kantenbeschichtung von Möbelteilen aus Holz, wobei das aufgebrachte Kantenband aus einem Kunststoff besteht, dessen Kontaktfläche im Sinne eines mittels einer Wärmequelle aktivierbaren Klebers ausgebildet ist, wobei als Wärmequelle vielfach eine Laserquelle zum Einsatz kommt.

Der Vorteil einer solchen Kantenbeschichtung liegt darin, dass eine sehr schmale Fuge im Übergangsbereich zwischen der Platte aus Holz und dem Kantenband entsteht, die unter dem Begriff "Nullfuge" bekannt ist.

Nachteilig allerdings ist auch hierbei, dass trotz der geringen Fugenbreite Feuchtigkeit eindringen kann, mit den vorgenannten Folgen. Die diesbezügliche Gefahr ist besonders groß bei solchen Produkten, da entsprechend verarbeitete Möbelplatten vielfach als Arbeitsplatten Verwendung finden, die in Gebrauch häufig mit Feuchtigkeit oder Nässe beaufschlagt werden.

Feuchtigkeit kann auch bei einer Kantenbeschichtung, bei der das Kantenband mittels Leim oder Kleber an der Platte befestigt ist, im Bereich der gebildeten Fuge eindringen, mit den vorbeschriebenen Folgen.

Der Erfindung liegt daher die Aufgabe zugrunde, eine hydrophobe Flüssigkeit zu entwickeln, die einen dauerhaften Schutz vor Nässe und Feuchtigkeit gewährleistet und die hinsichtlich der sicherheitstechnischen Vorschriften entspricht.

Diese Aufgabe wird durch eine hydrophobe Flüssigkeit mit den Merkmalen des Anspruchs 1 gelöst.

Die Verwendung der hydrophoben Flüssigkeit in der durch den Anspruch 1 definierten Zusammensetzung, nämlich eine Lösung auf Lösemittelbasis zumindest eines aliphatischen und/oder aromatischen Kohlenwasserstoffs, mit einer Kettenlänge von C9 bis C15 sowie zumindest einem Ether, Ester, Keton und/oder einem Alkohol, wobei die hydrophobe Flüssigkeit zudem ein nicht brennbares Fluor-Polymer in einem Anteil von 3 bis 4 Gew% aufweist, bietet gegenüber einer solchen nach dem Stand der Technik eine Vielzahl von Vorteilen, die sich sowohl hinsichtlich des industriellen Einsatzes wie auch hinsichtlich der Nutzung der damit behandelten Bauteile in bemerkenswerter Weise ergeben.

So ist zunächst und insbesondere zu nennen, dass die neue hydrophobe Flüssigkeit durch den Einsatz von Fluor-Polymer mit einem Flammpunkt > 60°C nicht brennbar ist oder zumindest eine verringerte Brennbarkeit aufweist, so dass diese Flüssigkeit den entsprechenden Forderungen der Arbeitsschutzbestimmungen entspricht, was den Einsatz der Flüssigkeit bei der industriellen Herstellung der Bauteile ermöglicht. Somit wird im Rahmen der vorliegenden Erfindung die Brennbarkeit des verwendeten Fluor-Polymers anhand des Flammpunkts festgelegt.

Als Alkohol kann vorzugsweise ein nicht-entzündlicher Alkohol, insbesondere Glykolether mit einem Flammpunkt von mehr als 60°C verwendet werden
Der Auftrag der hydrophoben Flüssigkeit auf den Bereich, in dem zwei Bauteile miteinander verbunden sind, von denen zumindest einer aus einem Holz oder Holzwerkstoff besteht, der zum Aufquellen bei Eindringen von Feuchtigkeit oder Nässe neigt, führt zu einem dauerhaften Schutz, der es sogar ermöglicht solche Bauteile in Feuchträumen einzusetzen.

Hierzu zählen die bereits zum Stand der Technik genannten Nut/FederVerbindungen von zwei Bauteilen, die beispielsweise unter dem Begriff "Klick-Verbindung" bekannt sind.

Auch die Benetzung einer erwähnten Null-Fuge, wie sie sich bei der Kantenbeschichtung einer Möbelplatte mittels eines durch Wärmebeaufschlagung klebfähigen Kantenbandes und dessen Anpressen an die Kante der Möbelplatte ergibt, gewährleistet eine Feuchtigkeitssperre.

Dies ergibt sich auch durch den Auftrag der erfindungsgemäßen hydrophoben Flüssigkeit auf eine gebildete Fuge nach einem Anbringen des Kantenbandes mittels Leim oder Kleber.

Nach einem weiteren Gedanken der Erfindung ist der Einsatz von Isoparaffinen als aliphatische Kohlenwasserstoffe besonders vorteilhaft.

Der nicht entzündliche Alkohol und/oder der Ether, insbesondere der Glykolether, kann bevorzugt in einem Anteil von 2 bis 17 Gew% vorliegen.

Besonders von Vorteil stellt sich durch die Verwendung der hydrophoben Flüssigkeit eine Nacharbeitbarkeit nach weniger als 20 Sekunden, ein. Dies betrifft insbesondere einen Lack- und/oder Farbauftrag z.B. auf den Verbindungsbereich oder das Kantenband. Somit ist die hydrophobe Flüssigkeit nach kürzester Zeit überlackierbar oder überstreichbar.

Dabei treten keine oder vernachlässigbare Vermischungseffekte der aufgetragenen Farbe mit der hydrophoben Flüssigkeit auf, so dass der Bereich auf welchem der Farbauftrag erfolgt den Farbton der aufgetragenen Farbe annimmt. Gleiches gilt für den Lackauftrag und den damit verbundenen Glanz.

Somit kann die hydrophobe Flüssigkeit im Durchlaufverfahren bei der automatisierten maschinellen Bearbeitung von Holz oder Holzwerkstoffen eingesetzt werden.

## Patentansprüche

1. Hydrophobe Flüssigkeit **gekennzeichnet durch** eine Lösung auf Lösemittelbasis zumindest eines aliphatischen und/oder aromatischen Kohlenwasserstoffs, mit einer Kettenlänge von C9 bis C15 sowie zumindest einem Ether, Ester, Keton und/oder einem Alkohol, insbesondere einem nichtentzündlichen Alkohol, wobei die hydrophobe Flüssigkeit zudem ein Fluor-Polymer, insbesondere ein nicht-brennbares Fluor-Polymer mit einem Flammpunkt > 60°C, in einem Anteil von 3 bis 4 Gew% aufweist.

2. Hydrophobe Flüssigkeit nach Anspruch 1, **dadurch gekennzeichnet, dass** der Alkohol, insbesondere der nicht entzündliche Alkohol, in einem Anteil von 2 bis 17 Gew% vorliegt.

3. Hydrophobe Flüssigkeit nach Anspruch 1, **dadurch gekennzeichnet, dass** der Ether ein Glykolether mit einem Flammpunkt > 60°C ist.

4. Hydrophobe Flüssigkeit nach einem der vorhergehenden Ansprüche, **dadurch gekennzeichnet, dass** der Ether, insbesondere der Glykolether, in einem Anteil von 2 bis 17 Gew% vorliegt.

5. Hydrophobe Flüssigkeit nach einem der vorhergehenden Ansprüche, **dadurch gekennzeichnet, dass** der aliphatische Kohlenwasserstoff ein Isoparaffin ist.

6. Verwendung der hydrophoben Flüssigkeit nach einem der Ansprüche 1-5 zum Auftrag auf den Bereich einer Verbindung zwischen zwei Bauteilen, von denen mindestens eines aus einem Holz oder Holzwerkstoff besteht.

7. Verwendung nach Anspruch 6, **dadurch gekennzeichnet, dass** die hydrophobe Flüssigkeit auf die einen Verbindungsbereich bildenden Nut und Feder zweier Bauteile aufgebracht wird.

8. Verwendung nach Anspruch 6, **dadurch gekennzeichnet, dass** die hydrophobe Flüssigkeit auf den mit einem Kantenband zu versehenden Kantenbereich einer Möbelplatte aufgebracht wird.

9. Verwendung nach einem der vorhergehenden Ansprüche, **dadurch gekennzeichnet, dass** sich nach dem Auftrag der hydrophoben Flüssigkeit eine Nacharbeitbarkeit, insbesondere eine Farb- und/oder Lackauftragbarkeit, innerhalb von weniger als 20 Sekunden einstellt.

## Claims

1. Hydrophobic fluid, **characterized by** a solvent-based solution of at least one aliphatic and/or aromatic hydrocarbon, having a chain length of C9 to C15 and at least one ether, ester, ketone and/or an alcohol, in particular a non-flammable alcohol, wherein the hydrophobic fluid additionally comprises a fluoropolymer, in particular a non-flammable fluoropolymer having a flash point >60°C, in a proportion of 3 to 4 wt.%.

2. Hydrophobic fluid according to claim 1, **characterized in that** the alcohol, in particular the non-flammable alcohol, is present in a proportion of 2 to 17 wt.%.

3. Hydrophobic fluid according to claim 1, **characterized in that** the ether is a glycol ether having a flash point >60°C.

4. Hydrophobic fluid according to one of the preceding claims, **characterized in that** the ether, in particular the glycol ether, is present in a proportion of 2 to 17 wt.%.

5. Hydrophobic fluid according to one of the preceding claims, **characterized in that** the aliphatic hydrocarbon is an isoparaffin.

6. Use of the hydrophobic fluid according to one of claims 1 to 5 for application to the region of a joint between two components, at least one of which is made of a wood or wood-based material.

7. Use according to claim 6, **characterized in that** the hydrophobic fluid is applied to the tongue-and-groove of two components forming a joint area.

8. Use according to claim 6, **characterized in that** the hydrophobic fluid is applied to the edge region of a furniture panel to be provided with an edge band.

9. Use according to one of the preceding claims, **characterized in that,** after the application of the hydrophobic fluid, a reworkability, in particular a dye and/or varnish applicability, is established within less than 20 seconds.

## Revendications

1. Liquide hydrophobe, **caractérisé en ce qu'**il contient une solution solvantée d'au moins un hydrocarbure aliphatique et/ou aromatique ayant une longueur de chaîne de C9 à C15 et au moins un éther, un ester, une cétone et/ou un alcool, en particulier un alcool ininflammable, lequel liquide hydrophobe contient en outre un polymère fluoré, en particulier un polymère fluoré incombustible ayant un point d'inflammation de > 60 °C, dans une proportion de 3 à 4 % en poids.

2. Liquide hydrophobe selon la revendication 1, **caractérisé en ce que** l'alcool, en particulier l'alcool ininflammable, est présent dans une proportion de 2 à 17 % en poids.

3. Liquide hydrophobe selon la revendication 1, **caractérisé en ce que** l'éther est un éther de glycol ayant un point d'inflammation de > 60 °C.

4. Liquide hydrophobe selon l'une des revendications précédentes, **caractérisé en ce que** l'éther, en particulier l'éther de glycol, est présent dans une proportion de 2 à 17 % en poids.

5. Liquide hydrophobe selon l'une des revendications précédentes, **caractérisé en ce que** l'hydrocarbure aliphatique est une isoparaffine.

6. Utilisation du liquide hydrophobe selon l'une des revendications 1 à 5 pour une application sur une zone d'assemblage entre deux composants dont l'un au moins se compose de bois ou d'un matériau à base de bois.

7. Utilisation selon la revendication 6, **caractérisée en ce que** le liquide hydrophobe est appliqué sur une gorge et une languette de deux composants formant une zone d'assemblage.

8. Utilisation selon la revendication 6, **caractérisée en ce que** le liquide hydrophobe est appliqué sur la zone de chant d'un panneau de meuble qui doit être dotée d'une bande de chant.

9. Utilisation selon l'une des revendications précédentes, **caractérisée en ce que**, après l'application du liquide hydrophobe, une opération suivante, en particulier une application de peinture et/ou de vernis, devient possible en moins de 20 secondes.
